# EUROPÄISCHE PATENTANMELDUNG

(11) **EP 3 348 126 A1**
(43) Veröffentlichungstag der Anmeldung: **18.07.2018**
(21) Anmeldenummer: 17208725.6
(22) Anmeldetag: 20.12.2017
(51) Int. Cl.: A01B 33/02, A01B 29/04, A01B 41/04, A01B 49/02

(54) **VORRICHTUNG ZUR BEARBEITUNG EINES UNTERGRUNDES**

(30) Priorität: 11.01.2017 DE 102017100440
(71) Anmelder: Maschinenfabrik Bermatingen GmbH & Co. KG, 88697 Bermatingen (DE)
(72) Erfinder: Gotterbarm, Roderich, 88697 Bermatingen (DE)
(74) Vertreter: Engelhardt, Volker

(57) **Zusammenfassung**

Bei einer Vorrichtung (1) zur Bearbeitung eines Untergrundes (2), auf dem Pflanzenreste (4) aufliegen oder überstehen und in dem Wurzeln der Pflanzenreste (4) eingewachsen sind, mit einer Antriebseinrichtung (6), durch die die Bearbeitungs-Vorrichtung (1) in eine Fahrtrichtung (7) bewegbar ist, mit einem oberhalb des Untergrundes (2) angeordneten Rahmengestell (9), durch das die Vorrichtung (1) an der Antriebseinrichtung (6) gehalten ist, soll mit dieser eine nahezu vollständige Bearbeitung eines abgemähten Untergrundes (2) unabhängig von vorhandenen Furchen, Vertiefungen oder sonstigen Unebenheiten in dem Untergrund (2) möglich sein, ohne dass die auf dem Untergrund (2) liegenden Pflanzenreste (4) aufgenommen und wieder abgelegt werden müssen.

Dies ist dadurch erreicht, dass die Bodenbearbeitungs-Vorrichtung (1) aus einer an dem Rahmengestell (9) fest angebrachten Achse (12) und aus einer Vielzahl von auf der Achse drehbar angeordneten Ringsegmenten (13) besteht und dass jedes der Ringsegmente (13) einen größeren Innendurchmesser als der Außendurchmesser der Achse (12) aufweist.

## Beschreibung

Die Erfindung bezieht sich auf eine Vorrichtung zur Bearbeitung eines Untergrundes, auf dem Pflanzenreste, insbesondere Maisstängel nach der Ernte, vorhanden sind nach dem Oberbegriff des Patentanspruchs 1.

Seit einigen Jahren ist es bekannt, dass Pflanzenreste auf abgeernteten Feldern einen Unterschlupf für Insekten zur Verfügung stellen, die die kalte Jahreszeit in den Pflanzenresten überwintern und im Frühling, insbesondere wenn die neuen Pflanzen ausgesät sind, als Schädlinge diese Nutzpflanzen befallen. Insbesondere der Schädling Maiszünsler überlebt die kalte und feuchte Jahreszeit in den abgeernteten auf den Feldern vorhandenen Pflanzenresten, die entweder auf der Oberfläche des Untergrundes liegen oder als Pflanzenwurzeln im Erdreich sind.

Um ein Überwintern des Maiszünslers biologisch zu verhindern, ist es oftmals ausreichend, die nach der Ernte verbleibende Pflanzenreste zu zerkleinern, aufzubrechen oder ausreichend tief in das Erdreich zu drücken.

Eine derartige Bearbeitungsmaßnahme und zu deren Durchführung geeignete Vorrichtung kann beispielsweise der EP 14 15 12 06 entnommen werden. Dabei besteht die Vorrichtung aus einer Messerwelle, durch die die verbliebenen Pflanzenreste zerkleinert werden und anschließend von einer Fördereinrichtung aufgenommen und über eine Bodenbearbeitungs-Walze gefördert sind, um anschließend auf die Oberfläche zurückzufallen. Wenn nämlich die Bodenfläche frei von Pflanzenresten ist kann die Bodenbearbeitungs-Walze die Pflanzenwurzeln zerkleinern oder aufbrechen, um diese als Unterschlupf für Insekten ungeeignet zu machen.

Es hat sich jedoch als nachteilig herausgestellt dass die Bodenbearbeitungs- Walze eine starre Achse aufweist, die einen vorgegebenen Abstand zu der zu bearbeitenden Bodenoberfläche einnimmt, so dass Bodenunebenheiten, die beispielsweise durch die Räder der Antriebsvorrichtung insbesondere eines Traktors, in das abgeerntete Feld eingefahren sind, nicht durch die Bodenbearbeitungs-Walze erreicht werden, da dieser Bereich des Untergrundes von der Walze zu weit entfernt ist. Demnach bleiben Pflanzenreste auf dem Feld liegen oder deren Wurzel sind unzerstört im Erdreich des Untergrundes vorhanden, so dass die Schädlinge eine ausreichende Anzahl von Pflanzenstrümpfen oder Pflanzenresten zur Verfügung haben, in denen ein geschützter Unterschlupf während der Wintermonate vorhanden ist.

Um die Pflanzenwurzeln zu erreichen, ist es nachhaltiger Weise erforderlich, die Pflanzenreste von dem Untergrund zu entfernen, so dass die Bodenbearbeitungs-Walze in den Untergrund eindringen kann, ohne dass die Pflanzenreste eine Art Schutzschicht bilden. Diese Entfernungsmaßnahme ist energie- und zeitaufwendig.

Es ist daher Aufgabe der Erfindung, eine Vorrichtung der eingangs genannten Gattung derart weiterzubilden, dass mit dieser eine nahezu vollständige Bearbeitung eines abgeernteten Untergrundes unabhängig von vorhandenen Furchen, Vertiefungen oder sonstigen Unebenheiten in dem Untergrund möglich ist, ohne dass die auf dem Untergrund liegenden Pflanzenreste aufgenommen und wieder abgelegt werden müssen.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Bodenbearbeitungs-Vorrichtung aus einer an dem Rahmengestell fest angebrachten Achse und aus einer Vielzahl von an der Achse drehbar angeordneten Ringsegmenten besteht und dass jedes der Ringsegmente einen größeren Innendurchmesser als der Außendurchmesser der Achse aufweisen, ist gewährleistet, dass die Unebenheiten des Untergrundes durch die Bewegungsmöglichkeiten der vereinzelten Ringsegmente ausgeglichen sind. Folglich können vorteilhafter Weise Vertiefungen in Form von Traktorspuren, Erdanhäufungen oder sonstige Bodenunebenheiten durch die einzelnen aufgehängten Ringsegmente ausgeglichen werden. Jedes an der Achse angeordnete Ringsegment bearbeitet nämlich eine bestimmte Bodenfläche und aufgrund dieses vorhandenen Spieles zwischen dem Innendurchmesser der Ringsegmente und dem Außendurchmesser der Achse können die vorhandenen Bodenunebenheiten problemlos ausgeglichen sein.

Mithilfe der erfindungsgemäßen Vorrichtung können abgeerntete Felder nahezu vollständig, beispielsweise in Höhe von 95 %, von Pflanzenresten, die sowohl auf der Oberfläche des Untergrundes als auch in diesem eingewachsen sind, bearbeitet sein, da diese für die Ringsegmente zugänglich sind. Aufgrund der Zerkleinerung der Pflanzenreste auf einer derart bemessenen Fläche verbleiben wenig bis keine geeigneten Unterschlupfmöglichkeiten für Insekten, insbesondere Schädlingen. Die kalte Jahreszeit sorgt folglich auf natürliche Weise für eine Verringerung des Schädlingsbefalls im Frühjahr, da die Insekten erfrieren oder die Nässe nicht vertragen und folglich eingehen. Je weniger Insektenlarven die Wintermonate überleben, desto geringer ist der Bestand solcher Schädlinge im Frühjahr, wodurch die neu gesetzten Pflanzen einem geringeren Schädlingsbefall ausgesetzt sind.

Um die Pflanzenreste, insbesondere die im Erdreich eingewachsenen Pflanzenwurzeln, möglichst ausreichend zerkleinern zu können, sind an der Außenmantelflächen der jeweiligen Ringsegmente Zähne, Dorne, Noppen, Stifte, Messer oder dergleichen vorgesehen, die entweder radial oder bogenförmig abstehen und folglich die auf dem Untergrund aufliegenden Pflanzenreste durchdringen und zerkleinern und gleichzeitig auch in eine vorgegebene Tiefe des Untergrundes eindringen, wodurch die eingewachsenen Pflanzenwurzeln entrissen oder zerkleinert sind.

Da während der Bearbeitung des Untergrundes durch die vereinzelten Ringsegmente Schmutz in Form von Lehm, Steine oder Pflanzenreste eingedrückt werden können, ist es erforderlich, die Ringsegmente voneinander zu beabstanden, so dass diese in Längsrichtung der Achse ein gewisses Spiel zur Verfügung haben. Aufgrund des vorhandenen Spieles zwischen zwei benachbarten Ringsegmenten können sich diese unabhängig voneinander ausrichten, so dass ein V-förmiger Luftspalt entsteht, durch den der zwischen dem Außenumfang der Achse und dem Inneren der Ringsegmente eingelagerter Schmutz heraustreten kann. Demnach reinigen sich die benachbarten Ringsegmente gegenseitig und verhindern damit, dass eine Rotation der Ringsegmente aufgrund des eingelagerten Schmutzes beeinträchtigt ist.

Es ist besonders vorteilhaft, wenn an der Achse ein oder mehrere Stützringe fest oder lösbar angebracht sind, denn dadurch ist erreicht, dass zwischen dem Rahmengestell und einem dazu benachbarten Stützring und/oder zwischen zwei räumlich voneinander getrennten gegenüberliegenden Stützringen ein Paket von Ringssegmenten angeordnet werden kann. Dabei ist wesentlich dass der Abstand zwischen dem Rahmengestell und einem dazu benachbarten Stützring bzw. zwischen zwei Stützringen derart bemessen ist, dass dieser etwas größer ausgestaltet ist als die Länge der das paketbildenden Ringssegmente, wodurch ein Luftspalt oder ein Freiraum zwischen den Stützringen und dem dazu benachbarten Ringssegmente oder zwischen zwei aneinander anliegenden Ringssegmenten entsteht. Durch diesen Luftspalt oder Freiraum kann Schmutz, Steine oder Pflanzenreste herausfallen, falls diese im Bereich der Achse oder zwischen zwei Ringssegmenten eingetreten sein sollten.

Wenn an der Achse zwei oder mehr Stützringe vorgesehen sind, ist es erforderlich, dass die Ringssegmente zwischen diesen beiden Schützlingen aufgefädelt oder angeordnet werden können. Zu diesem Zweck sind die Ringssegmente als Halbschalen oder Teilringe ausgestaltet, die mittels Befestigungsschrauben lösbar miteinander verbunden werden können. Es ist auch denkbar die Halbschalen der Ringssegmente mittels einer Schweißnaht oder eines Klebers fest zu verbinden und wenn die Ringssegmente aufgrund des Verschleißes auszutauschen sind, dann kann die Schweißnaht oder der Kleber als Sollbruchstelle verwendet werden, um die Ringssegmente von der Achse abnehmen zu können.

In der Zeichnung ist ein erfindungsgemäßes Ausführungsbeispiel dargestellt, das nachfolgend näher erläutert ist. Im Einzelnen zeigt:
- Figur 1: eine Vorrichtung zum Bearbeiten eines Untergrundes mit einer diese ziehenden Antriebseinrichtung, durch die die vorhandenen Pflanzenreste zerkleinert sind, in Seitenansicht,
- Figur 2: die Bodenbearbeitungs-Vorrichtung gemäß Figur 1 mit einer Achse, auf der eine Vielzahl von Ringsegmenten rotierbar gehalten sind und die mittels eines Rahmengestell an der Antriebseinrichtung befestigbar ist, in perspektivischer Ansicht,
- Figur 3: die Bodenbearbeitungs-Vorrichtung entlang der Schnittlinie III-III gemäß Figur 2,
- Figur 4: eines der Ringssegmente gemäß Figur 2, die als Halbschalen ausgestaltet sind, im befestigten Zustand, und
- Figur 5: das Ringssegmente gemäß Figur 4 vor der Montage, jeweils in perspektivischer Ansicht.

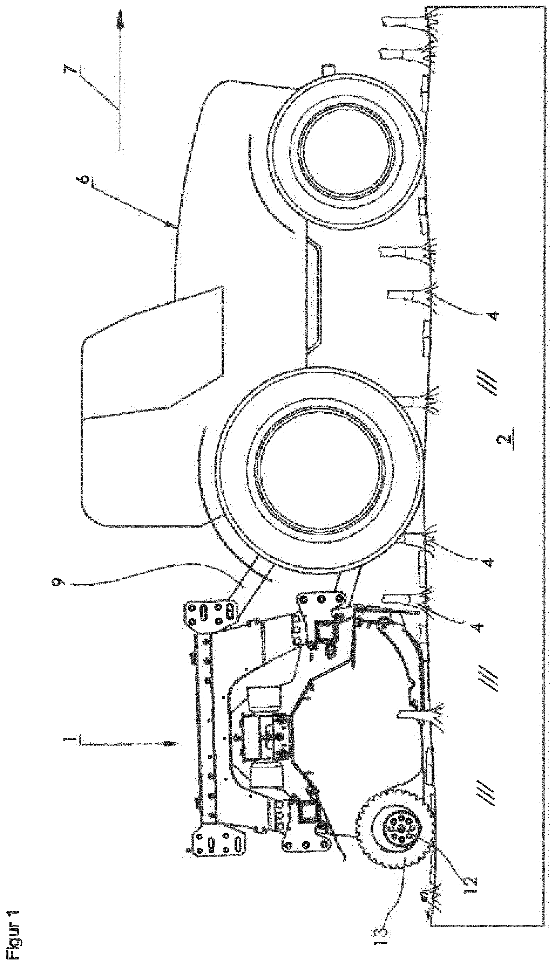

Aus Figur 1 ist eine Vorrichtung 1 zur Bearbeitung eines Untergrundes 2 zu entnehmen, auf dem Pflanzenreste 4 in Form von Pflanzenstümpfen oder eingewachsenen Pflanzenwurzeln vorhanden sind. Oftmals werden insbesondere Maispflanzen abgeerntet und Pflanzenreste 4 bleiben auf dem Untergrund 2 liegen oder die Pflanzenwurzeln sind noch in dem Untergrund 2 eingewachsen. Solche Pflanzenreste 4 dienen Insekten während der Wintermonate als Unterschlupf, so dass diese die kalte und feuchte Jahreszeit in dem Unterschlupf ausreichend geschützt verbringen können, um im darauffolgenden Frühling, insbesondere nach dem Aussähen neuer Pflanzen, sich zu vermehren und die Pflanzen zu befallen. Solche Schädlinge sorgen oftmals für einen erheblichen landwirtschaftlichen Schaden, da die Pflanzen einen geringeren Ertrag einbringen oder sogar ganz eingehen.

Die Vorrichtung 1 besteht aus einer Antriebseinrichtung 6, durch die die Bearbeitungs-Vorrichtung 1 in eine Fahrtrichtung 7 bewegbar ist. Die Bearbeitungs-Vorrichtung 1 umfasst ein Rahmengestell 9, das an der Antriebseinrichtung 6 angelenkt ist. Das Rahmengestell 9 ist höhenverstellbar, so dass der Abstand zwischen der Bearbeitungs-Vorrichtung 1 und dem Untergrund 2 einstellbar ist. Mithilfe der Bodenbearbeitungs-Vorrichtung 1 sollen die Pflanzenreste 4, die auf dem Untergrund 2 liegen geblieben sind sowie die in dem Erdreich des Untergrundes 2 eingewachsenen Pflanzenwurzeln zerkleinert bzw. aus diesem herausgerissen werden, so dass diese Pflanzenreste 4 nicht mehr als geeigneter Unterschlupf für Pflanzen-Schädlinge dienen können.

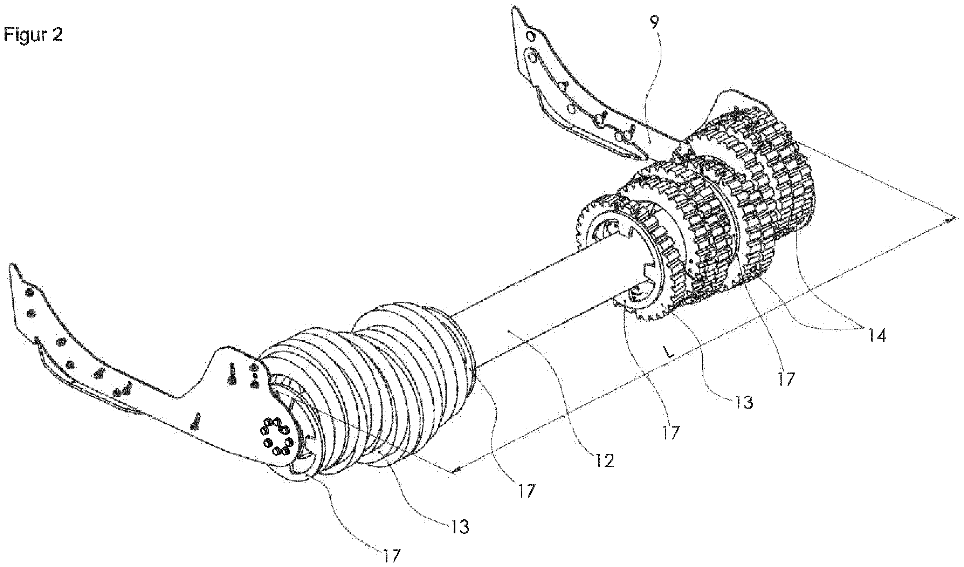

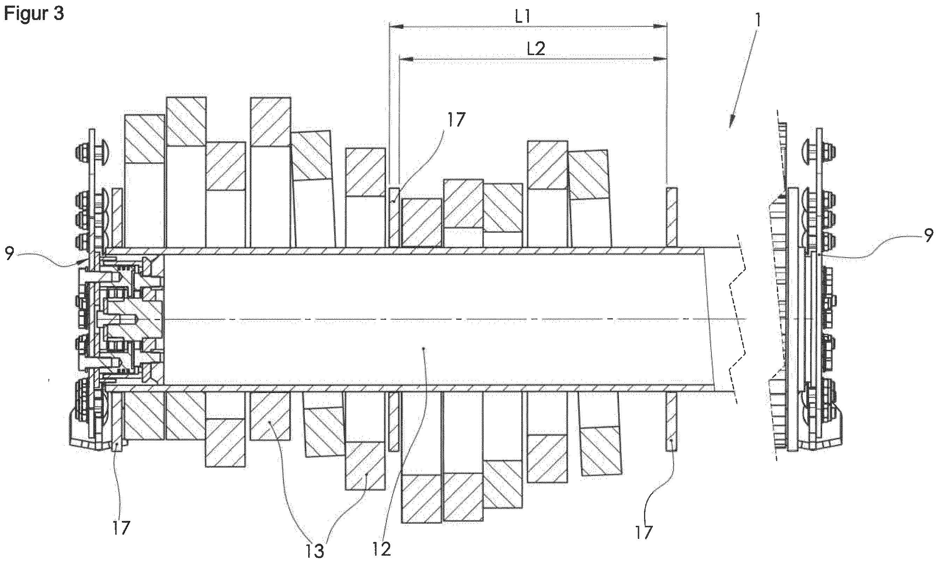

Insbesondere aus den Figuren 2 und 3 ist ersichtlich dass die Bearbeitungs-Vorrichtung 1 aus einer Achse 12 besteht, auf der eine Vielzahl von rotierbar gelagerten Ringsegmenten 13 angeordnet sind. Die beiden äußeren Ringsegmente 13 werden dabei durch das Rahmengestell 9 in Längsrichtung der Achse 12 gehalten, so dass diese nicht von der Achse 12 rutschen können. Die einzelnen Ringsegmente 13 sind demnach auf der Achse 12 aufgefädelt und stützen sich gegenseitig ab.

Die Ringsegmente 13 weisen eine Breite von 200-500 mm auf. Darüber hinaus ist ein Luftspalt 11 zwischen zwei benachbarten Ringsegmenten 13 vorgesehen, der etwa 20 mm beträgt.

Darüber hinaus ist der Innendurchmesser des jeweiligen Ringsegmente 13 wesentlich größer ausgebildet als der Außendurchmesser der Achse 12, so dass jedes der Ringsegmente 13 auf dem ihm gegenüberliegenden Untergrund 2 aufliegt und gleichzeitig ein gewisses Spiel zwischen den Ringsegmenten 13 und der Achse 12 vorhanden ist. Wenn also der Untergrund 2 in Längsrichtung der Achse 12 Unebenheiten, beispielsweise Vertiefungen oder Hügel, aufweist dann passt sich jedes der Ringsegmente 13 an diese Unebenheiten an, so dass auch Furchen von Fahrzeugrädern oder Erhöhungen durch die jeweiligen Ringsegmente 13 bearbeitet werden können.

Der Innendurchmesser der Achse 12 beträgt etwa 200-300 mm und der Innendurchmesser der jeweiligen Ringsegmente 13 etwa 500-700 mm, so dass eine erhebliche Differenz zwischen der Achse 12 und dem jeweiligen Ringsegmente 13 in Abhängigkeit von der Beschaffenheit des Untergrundes 2 individuell einstellbar ist. Der Abstand der Achse 12 von dem Untergrund 2 ist dabei nicht zu verändern und kann vielmehr konstant gehalten werden.

Aufgrund der Eigengewichtskraft der jeweiligen Ringsegmente 13 sowie durch den Vortrieb der Bearbeitungs-Vorrichtung 1 werden sämtliche der auf der Achse 12 aufgefädelten Ringsegmente 13 in Richtung des Untergrundes 2 gedrückt.

An der Außenmantelfläche der jeweiligen Ringsegmente 13 sind eine Vielzahl von Zähnen, Dornen, Noppen, Stifte oder Messer 14 angebracht, die entweder radial oder bogenförmig abstehen. Die Zähne, Messer, Dorne, Stifte 14 sollen in den Untergrund 2 eintauchen und die dort vorhandenen Pflanzenwurzeln zerstören und ausreißen. Die Eindringtiefe der Zähne, Dornen, Noppen, Stifte, Messer 14 kann beliebig ausgestaltet sein und hängt im Wesentlichen davon ab, welche Pflanzenwurzeln zu zerkleinern und zu entreißen sind. Erfahrungsgemäß ist eine Eindringtiefe von etwa 100 mm ausreichend, um die Pflanzenwurzeln zu erreichen und als Unterschlupf für Schädlinge zu vernichten.

Aus fertigungstechnischen Gründen kann es erforderlich sein, die Ringsegmente 13 aus einer Hülse 15 und einem an der Hülse 15 befestigten Außenkörper 16 zu fertigen. Die Hülse 15 besteht dabei aus einem metallischen Werkstoff und der Außenkörper 16 aus einem harten formstabilen Kunststoff. Bei Verschleiß kann der Außenkörper 16 ausgewechselt werden.

Dadurch, dass zwischen zwei benachbarten Ringsegmente 13 ein Luftspalt 11 vorgesehen ist, wackeln die Ringsegmente 13 auf der Achse 12, sobald diese rotieren und in Fahrtrichtung 7 bewegt werden. Da Felder aus Lehm, Steinen und Pflanzenresten bestehen, die in die Zwischenräume zwischen den Ringsegmenten 13 eindringen, unabhängig davon, welche Abstände zwischen diesen vorherrschen, werden diese Verschmutzungen zwischen den Ringsegmenten 13 beim Überfahren des Untergrundes 2 in diese eindringen können und diese verschmutzen. Um die Verschmutzung möglichst gering zu halten, ist der Luftspalt 11 ausreichend zu bemessen, in dem eine Art Selbstreinigung erzeugt ist, denn die Ringsegmente 13 bilden in dem Bereich, der nicht in Richtung des Untergrundes 2 gedrückt ist eine V-förmige Querschnittsform, durch die der Schmutz, die Steine und die Pflanzenreste herausfallen, so dass die Bearbeitungs-Vorrichtung 1 selbst reinigende Eigenschaften aufweist.

Der Abstand zwischen der Achse 12 und dem Untergrund 2 entspricht etwa dem Außenradius der Ringsegmente 13.

Die Ringsegmente 13 können einen identischen oder unterschiedlichen Außenradius in Abhängigkeit von der Struktur des Untergrundes 2 aufweisen.

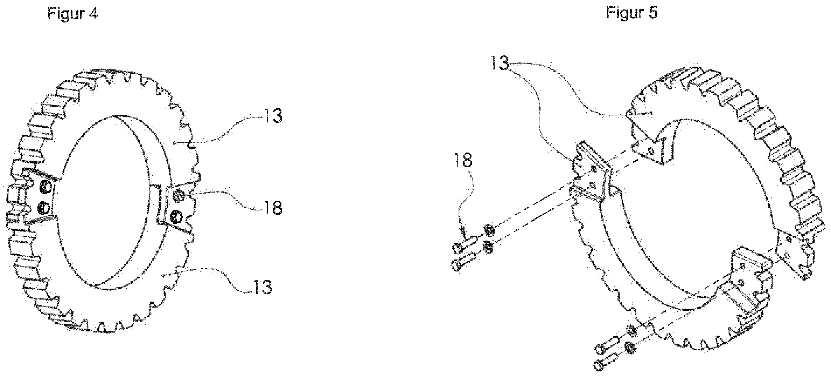

Aus den Figuren 4 und 5 ist eines der Ringssegmente 13 abgebildet, die als Halbschalen ausgestaltet sind. Folglich besteht jedes der Ringssegmente 13 aus zwei Teilringen, die mittels Befestigungsschrauben 18 in ihrer jeweiligen Trennebene lösbar miteinander verbunden sind. Zusätzlich oder alternativ können die Halbschalen der Ringssegmente 13 mittels einer Schweißnaht oder eines Klebers miteinander arretiert sein. Sollten die Ringssegmente 13 von der Achse 12 demontiert werden, kann die Schweißnaht oder der Kleber als Sollbruchstelle dienen und zerstört werden. Jede der beiden Halbschalen der Ringssegmente 13 weist einen Befestigungsflansch auf, in den Durchgangsbohrungen eingearbeitet sind, um die Befestigungsschrauben 18 aufzunehmen. Die Wandstärke des jeweiligen Befestigung-Flansche der Ringssegmente 13 ist dabei etwa halb so groß bemessen wie die Wandstärke des gesamten Ringssegmente 13.

Insbesondere aus Figur 3 ist ersichtlich, dass an der Achse 12 mindestens ein Stützring 17 angeformt ist, der radial nach außen absteht und folglich eine senkrecht zu der Achse 12 verlaufende Anlagefläche ausbildet. Die Anlageflächen der jeweiligen Stützringe 17 dienen den benachbart angeordneten Ringssegmente 13 als Stützfläche, wenn diese mittels einer horizontal oder im wesentlichen horizontal verlaufenden Kraft beaufschlagt sind. Die Schützlinge 17 können an der Achse 12 auch angeschweißt oder mittels Schrauben lösbar befestigt sein.

Zwischen dem Rahmengestell 9 und einem der Stützringe 17 und/oder zwischen zwei voneinander beabstandeten Stützringen 17 sind Pakete von Ringssegmenten 13 angeordnet oder aufgefädelt. Die Anzahl der Ringssegmente 13, die ein solches Paket bilden, hängt von der Bodenbeschaffenheit des Untergrundes 2 ab. Dabei ist der Abstand zwischen dem Rahmengestell 9 und dem dazu benachbart verlaufenden Stützring 17 bzw. zwischen zwei räumlich voneinander getrennten Stützringen 17 derart bemessenen, dass dieser etwa 20-30 mm größer ist, als die Länge, die von den dazwischen angeordneten Paketen von Ringssegmenten 13 gebildet ist. Folglich herrscht zwischen den einzelnen das Paket bildenden Ringssegmente 13 ein gewisses Spiel oder ein Freiraum 11, um zu gewährleisten, dass die einzelnen Ringssegmente 13 sich individuell an die Beschaffenheit des Untergrundes 2 anpassen können und dass gleichzeitig an der Achse 9 oder an den Ringssegmente 13 abgelagerter Schmutz, Steine oder Pflanzenreste 4 aus diesem Luftspalt oder Zwischenraum herausfallen können.

## Patentansprüche

1. Vorrichtung (1) zur Bearbeitung eines Untergrundes (2), auf dem Pflanzenreste (4) aufliegen oder überstehen und in dem Wurzeln der Pflanzenreste (4) eingewachsen sind,
- mit einer Antriebseinrichtung (6), durch die die Bearbeitungs-Vorrichtung (1) in eine Fahrtrichtung (7) bewegbar ist,
- mit einem oberhalb des Untergrundes (2) angeordneten Rahmengestell (9), durch das die Vorrichtung (1) an der Antriebseinrichtung (6) gehalten ist,
**dadurch gekennzeichnet,**
**dass** die Bodenbearbeitungs-Vorrichtung (1) aus einer an dem Rahmengestell (9) fest oder lösbar angebrachten Achse (12) und aus einer Vielzahl von auf der Achse (12) drehbar angeordneten Ringsegmenten (13) besteht und dass jedes der Ringsegmente (13) einen größeren Innendurchmesser als der Au-βendurchmesser der Achse (12) aufweist.

2. Vorrichtung nach Anspruch 1,
**dadurch gekennzeichnet,**
**dass** an dem jeweiligen Ringsegment (13) nach außen abstehende Zähne, Dorne, Noppen, Stifte, Messer (14) oder dergleichen ausgearbeitet, vorgesehen oder angeordnet sind, im Bearbeitungszustand auf die auf oder in den Untergrund (2) liegenden oder eingewachsenen Pflanzenreste einwirken.

3. Vorrichtung nach Anspruch 1 oder 2,
**dadurch gekennzeichnet,**
**dass** zwischen zwei benachbarten Ringsegmenten (13) jeweils ein Luftspalt (11) von mindestens 20 mm vorhanden ist und dass die beiden äußeren Ringsegmente (13) durch das Rahmengestell (9) abgestützt sind, derart, dass die dazwischen verlaufenden Ringsegmente (13) aufgefädelt und drehbar an der Achse (12) gehalten sind und gleichzeitig während der Rotation der jeweiligen Ringsegmente (13) eine geringfügige Neigung aus der Vertikalen ermöglicht ist.

4. Vorrichtung nach einem der vorgenannten Ansprüche,
**dadurch gekennzeichnet,**
**dass** die von den Ringsegmenten (13) abstehenden Zähne, Dorne Noppen, Stifte, Messer (14) oder dergleichen in den Untergrund (2) eindringen und die dort vorhandenen Pflanzenreste (4) oder auf dem Untergrund abgelegte Pflanzenreste (4) zerkleinern, zerstören und/oder aufbrechen.

5. Vorrichtung nach einem der vorgenannten Ansprüche,
**dadurch gekennzeichnet,**
**dass** der Abstand zwischen dem Untergrund (2) und der Achse (12) etwa dem Außenradius der jeweiligen Ringsegmente (13) entspricht.

6. Vorrichtung nach einem der vorgenannten Ansprüche,
**dadurch gekennzeichnet,**
**dass** die Zähne, Dorne, Noppen, Stifte, Messer (14) oder dergleichen radial oder bogenförmig von der Mantelfläche der jeweiligen Ringsegmente (13) abstehen.

7. Vorrichtung nach einem der vorgenannten Ansprüche,
**dadurch gekennzeichnet,**
**dass** das jeweilige Ringsegment (13) aus einer Hülse (15) und einem fest an der Außenmantelfläche der Hülse (15) angebrachten ringförmigen Außenkörper (16) bestehen, dass die jeweilige Hülse (15) aus einem metallischen Werkstoff und der jeweilige Außenkörper (16) aus einem formstabilen Kunststoff hergestellt sind und, dass der Außenkörper (16) lösbar mit der Hülse (15) verbunden ist.

8. Vorrichtung nach einem der vorgenannten Ansprüche,
**dadurch gekennzeichnet,**
**dass** die Breite der jeweiligen Ringsegmente (13) etwa 200-500 mm beträgt und dass die Breite der jeweiligen Ringsegmente (13) unterschiedlich bemessen ist in Abhängigkeit von der Position der jeweiligen Ringsegmente (13) bezogen auf die Achse (12).

9. Vorrichtung nach einem der vorgenannten Ansprüche,
**dadurch gekennzeichnet,**
**dass** das Rahmengestell (9) aus zwei parallel zueinander verlaufenden Flansche gebildet ist, deren Abstand zueinander gegenüberliegend zu der Achse (12) derart ausgestaltet ist, dass ein der Antriebsvorrichtung (6) zugeordneter Aufnahme-und Halte-Mechanismus die freien Ende das Rahmengestell (9) aufnehmen und mit diesen gekoppelt werden kann.

10. Vorrichtung nach einem der vorgenannten Ansprüche,
**dadurch gekennzeichnet,**
**dass** die Achse (12) im Wesentlichen parallel zu dem Untergrund (2) ausgerichtet ist und dass die jeweiligen Ringsegmente (13) in Abhängigkeit von dem jeweiligen Abstand der Ringsegmente (13) zu dem Untergrund (2) den Abstand oder die Kontur des Untergrundes (2) ausgleichen und das die jeweiligen Ringsegmente (13) aufgrund ihrer Eigengewichtskraft und durch die Vorwärtsbewegung der Achse (12) in den Untergrund (2) oder auf den Untergrund (2) eingedrückt bzw. aufgepresst sind.

11. Vorrichtung nach einem der vorgenannten Ansprüche,
**dadurch gekennzeichnet,**
**dass** an der Achse (12) mindestens ein radial nach außen abstehende Stützring (17) an geformt, angeschweißt oder lösbar befestigt ist, an dem zwei unmittelbar zu diesem benachbart angeordneten Ringssegmente (13) Anliegen und diesen als abstützen Fläche bei horizontal auftretenden Kraftkomponenten benutzen.

12. Vorrichtung nach Anspruch 11,
**dadurch gekennzeichnet**,
das zwischen dem Rahmengestell (9) und einem der Stützringe (17) und/oder zwischen zwei zueinander beabstandeten Stützringen (17) ein Paket von Ringssegmenten (13) aufgefädelt und/oder lösbar befestigt angeordnet ist.

13. Vorrichtung nach einem der vorgenannten Ansprüche,
**dadurch gekennzeichnet,**
**dass** das jeweilige Ringssegmente (13) aus zwei Halbschalen aufgebaut ist, die lösbar miteinander verbunden sind.

14. Vorrichtung nach Anspruch 13,
**dadurch gekennzeichnet**,
das die beiden Halbschalen der jeweiligen Ringssegmente (13) mittels Befestigungsschrauben (18) oder mittels einer Schweißnaht oder eines Klebers verbunden sind und dass die Schweißnaht oder der Kleber bei der Demontage der Ringssegmente (13) als Sollbruchstelle zerstörbar ist.
